# EUROPEAN PATENT SPECIFICATION

(11) **EP 4 569 359 B1**
(45) Date of publication and mention of the grant of the patent: **14.10.2026**
(21) Application number: 23758249.9
(22) Date of filing: 10.08.2023
(51) Int. Cl.: G02B 1/00, G02B 13/16, B29D 11/00, G02B 5/00, G02B 27/00

(54) **OPTICAL DEVICES THAT INCLUDE A PROTECTED LENS**
OPTISCHE GERÄTE, DIE EINE GESCHÜTZTE LINSE ENTHALTEN
DISPOSITIFS OPTIQUES COMPRENANT UNE LENTILLE PROTÉGÉE

(30) Priority: 11.08.2022 US 202263371166 P
(43) Date of publication of application: 18.06.2025
(73) Proprietor: Nil Technology ApS, 2800 Kongens Lyngby (DK)
(72) Inventor: MATTINSON, Fredrik, 2800 Kongens Lyngby (DK); ATELLA, Stefano, 8810 Horgen (CH); HASHEMI, Ehsan, 2800 Kongens Lyngby (DK); FRANCOIS, Olivier, 2800 Kongens Lyngby (DK); QUAADE, Ulrich, 2800 Kongens Lyngby (DK)
(74) Representative: Fish & Richardson P.C.
(86) International application number: PCT/EP2023/072237
(87) International publication number: WO 2024/033505

(56) References cited:
- EP-A1- 3 663 808
- EP-A2- 3 872 538
- WO-A1-2020/242384
- US-A1- 2019 064 532
- US-A1- 2021 028 215
- US-A1- 2021 307 608

## Description

### FIELD OF THE DISCLOSURE

The present disclosure relates to optical devices that include a protected lens.

### BACKGROUND

Wafer-level stacking sometimes is used to align optical apertures to lenses during fabrication of optical devices. In some instances, subsequent handling of the optical devices may result in the lenses becoming scratched or otherwise damaged.

US 2021/028215 A1 describes hybrid imaging systems incorporating conventional optical elements and metasurface elements with light sources and/or detectors, and methods of the manufacture and operation of such optical arrangements. EP3663808 A1 describes a meta-lens including a first region including a plurality of first nanostructures that are two-dimensionally provided in a circumferential direction and a radial direction. A plurality of second regions surrounds the first region. Each of the plurality of second regions includes a plurality of second nanostructures that are two-dimensionally provided in the circumferential direction and the radial direction.

### SUMMARY

The present disclosure describes optical devices in which a lens structure that is distributed across a surface of a glass or other support faces the optical substrate that has an optical structure. The present disclosure also describes assemblies incorporating one or more such optical devices, as well as methods of manufacturing the optical devices and assemblies.

The invention is defined by the appended claims. For example, in one aspect, according to claim 1, the present disclosure describes an apparatus that includes an aperture substrate, a lens substrate and a spacer. The aperture substrate has an optical aperture. The lens substrate includes a lens structure on a support, the lens structure being closer to the aperture substrate than is the support. The lens structure is defined throughout a metasurface distributed across a surface of the support and comprises meta-atoms configured to change a local amplitude, a local phase, or both, of a light wave at an application, wavelength. The support is transparent to the application wavelength. A first end of the spacer is attached to the aperture substrate, and a second end of the spacer is attached either to the lens substrate or to a protective covering that covers the metasurface. An opening extends through the spacer from the first end to the second end, wherein the opening contains a vacuum or air.

According to the present invention, the aperture substrate includes a first support on which a metal layer is disposed, wherein the metal layer defines the optical aperture, and the first support is transparent to the application wavelength. In some implementations, the lens structure faces the optical aperture, whereas in some implementations, the lens structure faces the first support. In some cases, the support on which the lens structure is disposed and the first support on which the metal layer is disposed are composed of glass. In some implementations, the metal layer defining the optical aperture is composed of a black chrome coating. In some implementations, the opening in the spacer contains air.

In some implementations, the apparatus further includes an image sensor disposed so that light entering through the optical aperture passes through the lens structure and then is incident on the image sensor.

The present disclosure also describes methods of manufacturing optical devices. For example, in one aspect, according to claim 9, a method includes providing a first wafer on which a metal layer is disposed, wherein the metal layer defines optical apertures, and the first wafer is transparent to an application wavelength. The method includes providing a second wafer having a lens structure on a surface of the second wafer, wherein the lens structure is defined by a metastructure distributed across a surface of the second wafer and comprises meta-atoms configured to change a local amplitude, a local phase, or both, of a light wave at the application wavelength, and wherein the second wafer is transparent to the application wavelength. The method further includes providing a spacer wafer, wherein there are openings extending through the spacer wafer from a first side of the spacer wafer to a second side of the spacer, and wherein the openings contains a vacuum or air. The first side of the spacer wafer is attached to the first wafer, and the second side of the spacer wafer is attached either to the second wafer, or to a protective covering that covers the metastructure, to form a wafer stack, such that the lens structure is closer to the first wafer than is the second wafer, and wherein each of the optical apertures is aligned with a respective one of the openings in the spacer wafer.

Some implementations include one or more of the following features. For example, in some implementations, the method includes separating the wafer stack into individual optical devices. In some implementations, the method includes providing an image sensor so that light entering through the optical aperture of one of the individual optical devices passes through the lens structure and then is incident on the image sensor.

Some implementations can provide one or more of the following advantages. For example, by placing the lens structure on the side of the lens substrate that faces the aperture substrate, the likelihood that the lens structure will become scratched or otherwise damaged during subsequent handling of the optical device can be reduced. The presence of an air or other low-index optically clear material core region (e.g., rather than glass) between the active region of the lens structure and the aperture can result, in some cases, in the optical device having a relatively small total z-height and/or small total track length (TTL). Also, in some implementations, using a relatively thin glass substrate to support the lens structure can help keep the influence of optical aberrations caused by converging light beams through the flat surface of the glass substrate relatively small.

Other aspects, features and advantages will be readily apparent form the following detailed description, the accompanying drawings, and the claims.

### BRIEF DESCRIPTION OF THE DRAWINGS

FIG. 1 illustrates an example of an optical device.
FIGS. 2 and 3 illustrate stages in the wafer-level fabrication of optical devices as in FIG. 1.
FIG. 4 illustrates an example of an optical assembly that includes the optical device of FIG. 1.
FIG. 5 illustrates an example of light beams being sensed by the optical assembly of FIG. 4.
FIG. 6 illustrates another example of an optical device.
FIG. 7 illustrates a further example of an optical device.
FIG. 8 illustrates yet another example of an optical device.

### DETAILED DESCRIPTION

The present disclosure describes optical devices in which an active region of the lens structure faces the aperture substrate and thereby can be protected within an interior area of the device. Some of the example implementations described below refer to meta-optical elements (MOEs) as an example of the lens structure. However, the devices and techniques described in the present disclosure also can be used with other types of lenses (e.g., diffractive optical elements (DOEs)) that are distributed across the surface of a glass or other transparent support.

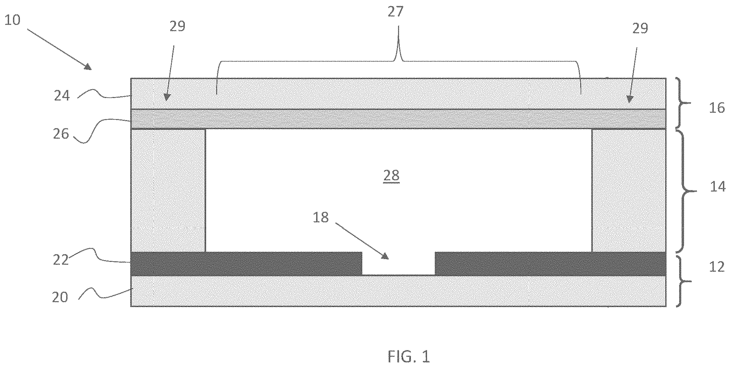

As shown in the example of FIG. 1, an optical device 10 includes an aperture substrate 12, a spacer 14 attached to the aperture substrate 12, and a lens substrate 16 attached to the spacer 14. The substrates 12, 16 and wafer 14 are stacked one on the other, with the spacer 14 disposed between the aperture substrate 12 and the lens substrate 16.

The aperture substrate 12 includes an aperture 18 defined, for example, by a metal layer (e.g., black chrome coating) 22 on the surface of a first support 20. The support 20 is transparent to the intended application wavelength, or range of wavelengths (e.g., near infra-red (IR), IR, or visible), for the device 10. For example, in some implementations, the application wavelength may be 940 nm, 1380 nm, or 1550 nm. The support 20 can be composed, for example, of glass or other transparent material. In some implementations, the first support 20 is composed of D 263^{®} T glass, which is a nearly colorless flat borosilicate thin glass made by SCHOTT. Other types of glass or transparent materials (e.g., SCHOTT MEMpax^{®} ultra-thin borosilicate glass) may be used in some implementations.

The lens substrate 16 includes a lens structure 26 on a surface of a second support 24. The support 24 also is transparent to the intended application wavelength, or range of wavelengths for the device 10 and can be composed, for example, of glass. In some implementations, the support 24 is composed of D 263^{®} T glass. Other types of glass or transparent materials may be used in some implementations.

In some implementations, the lens structure 26 is defined throughout a metasurface, which also may be referred to as metastructure. The metastructure can include small structures (e.g., nanostructures or other meta-atoms) distributed across the surface of the support 24 and arranged to interact with light in a particular manner. The nanostructures may, individually or collectively, interact with light waves. For example, the nanostructures or other meta-atoms may change a local amplitude, a local phase, or both, of an incoming light wave.

When meta-atoms (e.g., nanostructures) of a metasurface are in a particular arrangement, the metasurface may act as an optical element such as a lens, lens array, beam splitter, diffuser, polarizer, bandpass filter, or other optical element. In some instances, metasurfaces may perform optical functions that are traditionally performed by refractive and/or diffractive optical elements. The meta-atoms may be arranged, in some cases, in a pattern so that the metastructure functions, for example, as a lens, grating coupler or other optical element. In other instances, the meta-atoms need not be arranged in a pattern, and the metastructure can function, for example, as a fanout grating, diffuser or other optical element. In some implementations, the metasurfaces may perform other functions, including polarization control, negative refractive index transmission, beam deflection, vortex generation, polarization conversion, optical filtering, and plasmonic optical functions.

In the illustrated example of FIG. 1, the lens structure 26 includes an optically active region 27 surrounded laterally by an optically inactive region 29. One end of the spacer can be attached to the optically inactive region 29 of the lens substrate 16. The spacer 14, which separates the aperture 18 from the lens structure 26 by a specified distance, also can be composed, for example, of glass. Further, the spacer 14 can have an opening 28 that extends from one side of the spacer to the other side. In such an arrangement, the space within the opening 28 contains vacuum or can be filled with air. Such a configuration can allow the optical device, in some implementations, to have a relatively small total z-height and/or relatively small total track length (TTL). Implementations in which the opening 28 contains air or a vacuum can be preferable to filling the opening, for example, with an epoxy or polymer material, which may adversely impact optical performance due to the higher refractive index of such materials.

As shown in FIG. 1, the lens structure 26 is disposed on a surface of the second support 24 that faces the aperture substrate 12. That is, the lens structure faces the aperture 18, rather than being disposed on an exterior surface of the optical device 10. Such an arrangement allows the lens structure (e.g., the meta-atoms) 18 to be protected within an interior region 28 defined by the housing of the optical device 10 so that the likelihood of scratches or other damage to the lens structure 26 during subsequent handling of the optical device 10 can be reduced.

The arrangement of FIG. 1 can, in some instances, be less costly and/or less complicated to manufacture than situations in which the lens structure is disposed on the outer surface of the lens substrate and is encapsulated for protection. Although converging light beams through the flat surface of the glass support 24 might introduce optical aberrations, such aberrations depend, to a large extent, on the thickness of the support 24 and on its index of refraction. Thus, the influence of such aberrations can be kept relatively small by using a relatively thin support. For example, in some cases, the support 24 can have a thickness of about 200 µm. Other thicknesses may be appropriate for some implementations.

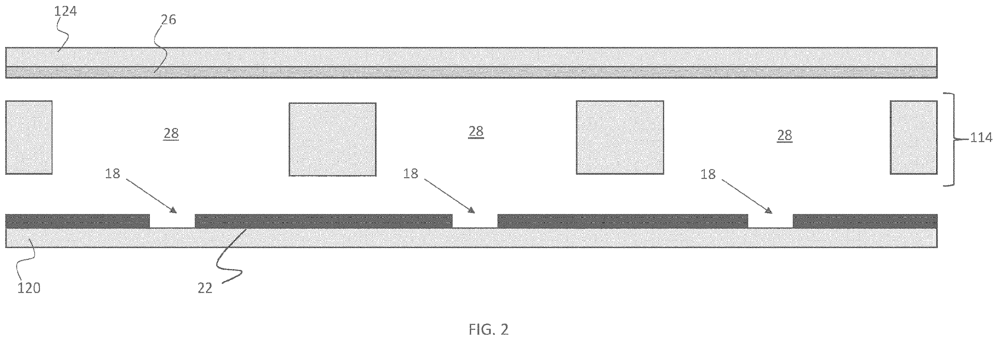

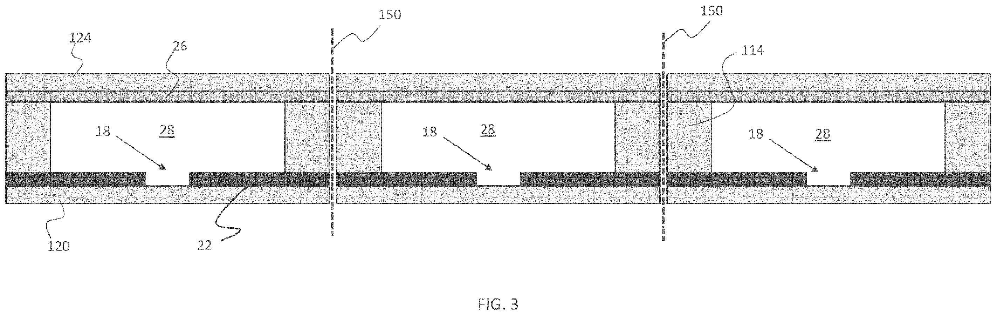

As noted above, the optical device 10 can be fabricated, for example, by a wafer-level process, an example of which is described in connection with FIGS. 2 and 3. As shown in FIG. 2, a first transparent (e.g., glass) wafer 120 is provided and has a thin metal layer 22 composed, for example, of a black chrome coating, on the surface of the wafer. The thin metal layer 22 defines optical apertures 18. A second transparent (e.g., glass) wafer 124 also is provided and has a lens structure 26 on its surface. The lens structure 26 can include, for example, a metastructure composed of nanostructures such as meta-atoms. In other implementations, the lens structure 26 may be composed of other types of lenses (e.g., DOEs) that are distributed across the surface of the second wafer 124. A spacer wafer 114, composed for example of glass, also is provided. The spacer wafer 114 includes openings 28, each of which extends through the spacer wafer from a first side to a second opposite side. The space defined by the openings 28 contains air or a vacuum.

Next, as shown in FIG. 3, the first wafer 120 is attached to the first side of the spacer wafer 114, and the second wafer 124 is attached to the second, opposite side of the spacer wafer 114 to form a wafer stack. The first and second wafers 120, 124 are attached to the spacer wafer 114 such that active regions of the lens structure 26 on the second wafer 124 face toward the first wafer 120 (or toward the thin metal layer 22 that defines the optical apertures 18). The wafers 120, 124 can be attached to the spacer wafer 114, for example, by an adhesive. Subsequently, the wafer structure can be separated into individual optical devices, for example, by dicing along dicing lines 150.

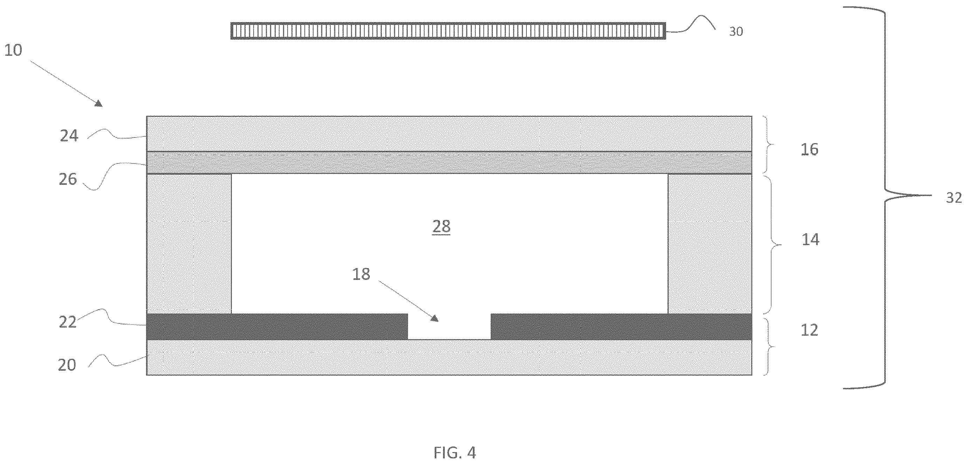

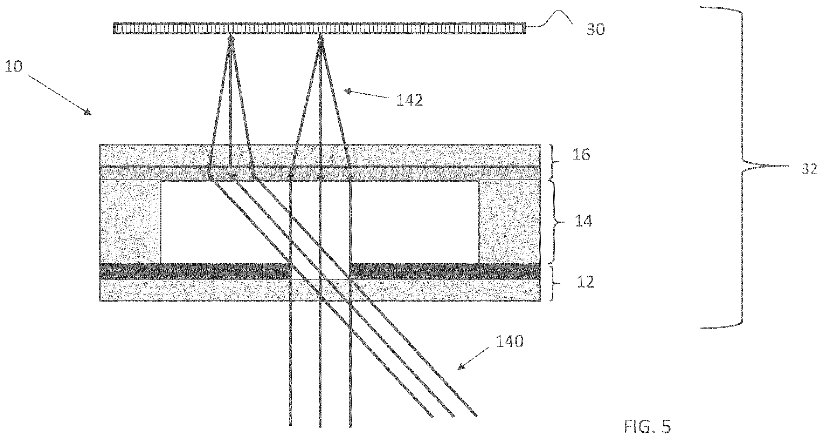

The optical device 10 can be integrated into an optoelectronic assembly, such as a light sensing module. As shown in the example of FIGS. 4 and 5, such an assembly 32 can include an image sensor 30 disposed so that light 140 entering the optical device 10 through the aperture 18 passes through the lens structure 26 before being incident on the image sensor 30. For example, if the lens structure 26 is implemented as a metasurface that includes meta-atoms, the meta-atoms may change a local amplitude, a local phase, or both, of incoming light waves 140. After passing through the lens structure 26, the modified light waves 142 are incident on the image sensor 30.

During assembly of the module, the optical device 10, which includes the lens structure 26, can be placed into a lens holder and actively aligned with the image sensor 30 before being fixed in place over the image sensor. Because the lens structure 26 faces the aperture 18, the lens structure can more easily be protected from scratches or other damage that might otherwise occur during assembly.

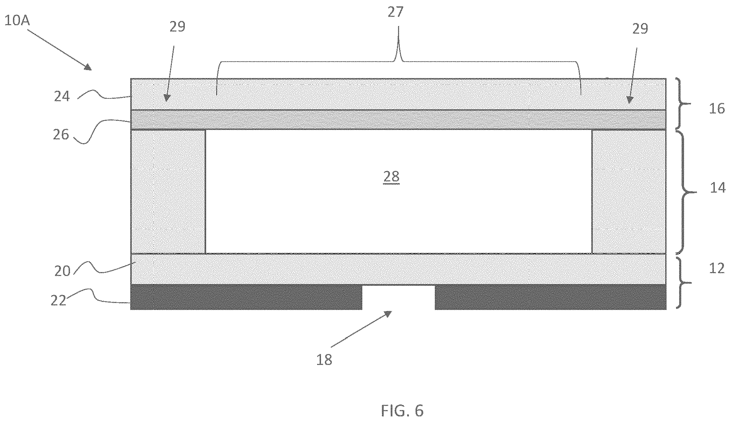

Although the foregoing implementations show the aperture 18 and the metal layer (e.g., black chrome coating) 22 facing the lens structure 26, in some implementations the metal layer (e.g., black chrome coating) 22 may be on the exterior of the first support 20 such that the metal layer 22 faces away from the lens structure, as shown in the example optical device 10A of FIG. 6. Nevertheless, in both this and the other examples described above, the lens structure 26 faces the aperture substrate 12, which includes a first support on which a metal layer that defines the optical aperture is disposed. The optical device 10A also can be integrated into an optoelectronic assembly, such as a light sensing module.

The implementations of FIGS. 5 and 6 can present a trade-off in some cases. For example, changing the index of refraction between the aperture stop and nanostructure may influence the optical performance. Thus, in the implementation of FIG. 6, the support (i.e., the cover glass) 20 is located after the aperture stop, and the index of refraction changes between the aperture stop and the nanostructure. As a result, optical performance may be reduced slightly due to optical aberrations. On the other hand, in the implementation of FIG. 5, where the cover glass is located before the aperture stop, the presence of the coverglass will not affect optical performance. Nevertheless, a potential benefit of using the implementation of FIG. 6 is that, compared with the implementation of FIG. 5, the device can be more compact. For example, if the cover glass 20 in FIG. 6 is sufficiently thin (e.g., on the order of about 200 µm or possibly even less in some cases), little optical performance will be lost, and a highly compact device still can be achieved. Further, in such a design, the nano-structure can still be protected from both sides.

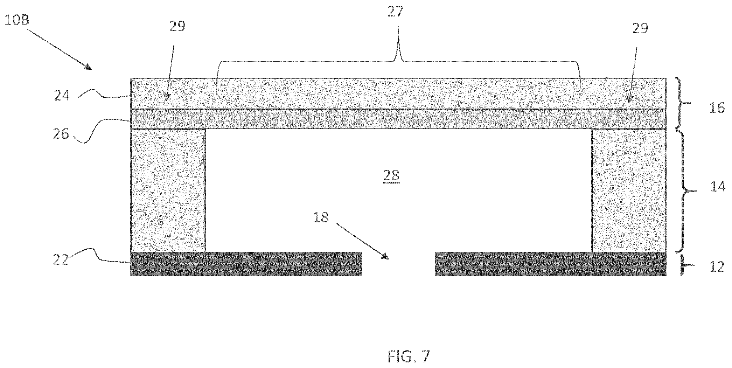

In some implementations, as illustrated in the example optical device 10B of FIG. 7, the coverglass 20 can be omitted. That is, the aperture substrate 12 defines an aperture 18, but there is no coverglass 20. With no coverglass at the aperture stop, a highly compact design can be achieved. Further, as the lens structure 26 still faces the aperture substrate 12, the meta-atoms (e.g., nanostructures) of the lens structure 26 can be substantially protected within the housing.

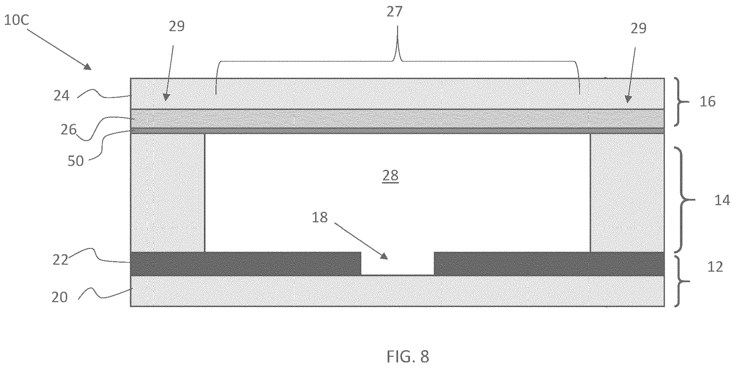

In some implementation, as shown in the example of FIG. 8, the lens structure 26 (i.e., the metasurface) of the device 10C is covered by a protective covering 50 disposed on the side of the metasurface opposite that of the support 24. This arrangement can provide even more protection for the metasurface. In some implementations, the protective covering 50 is an encapsulation layer composed, for example, of a material that is optically clear at the application wavelength. For example, in some instances, the encapsulation layer 50 is composed of a polymer. The encapsulation layer 50 can be relatively thin (e.g., 1-3 µm in some instances) so as to reduce the extent of any adverse impact on optical performance. In some implementations, the protective covering 50 is a relatively thin cover glass. For example, the protective covering 50 can be implemented as a SCHOTT MEMpax^{®} ultra-thin borosilicate glass having a thickness, e.g., of 70 µm. Other materials and/or thicknesses may be used for the protective covering 50 in some implementations.

In some instances, one or more light sensing modules, as described above, can be integrated, for example, into mobile phones, laptops, televisions, wearable devices, or automotive vehicles.

While this specification contains many specifics, these should not be construed as limitations on the scope of the disclosure or of what may be claimed, but rather as descriptions of features specific to particular implementations. Certain features that are described in this specification in the context of separate implementations may also be combined in the same implementation. Conversely, various features that are described in the context of a single implementation may also be implemented in multiple implementations separately or in any suitable subcombination. Various modifications can be made to the foregoing examples. Accordingly, other implementations also are within the scope of the claims.

## Claims

1. An apparatus (10, 10A, 10C) comprising:
an aperture substrate (12) comprising a first support (20) on which a metal layer (22) is disposed, the metal layer defining an optical aperture (18), and the first support being transparent to an application wavelength and covering the optical aperture (18);
a lens substrate (24) including a lens structure (26) on a support (24), the lens structure being closer to the aperture substrate (12) than is the support, and the lens structure being defined throughout a metasurface distributed across a surface of the support and comprising meta-atoms configured to change a local amplitude, a local phase, or both, of a light wave at an application wavelength, and the support being transparent to the application wavelength; and
a spacer (14), wherein a first end of the spacer is attached to the aperture substrate (12), and a second end of the spacer is attached either to the lens substrate (24) or to a protective covering (30) that covers the metasurface, and
wherein an opening (28) extends through the spacer (14) from the first end to the second end, wherein the opening contains a vacuum or air.

2. The apparatus of claim 1, wherein the lens structure faces the optical aperture.

3. The apparatus of claim 1, wherein the lens structure faces the first support.

4. The apparatus of any one of claims 1-3, wherein the support on which the lens structure is disposed and the first support on which the metal layer is disposed are composed of glass.

5. The apparatus of any one of claims 1-4, wherein the metal layer defining the optical aperture is composed of a black chrome coating.

6. The apparatus of any one of claims 1-5, wherein the opening contains air.

7. The apparatus of claim 1, wherein the lens structure includes an optically active region surrounded laterally by an optically inactive region, and wherein the second end of the spacer is attached to the optically inactive region of the lens structure.

8. The apparatus of any one of claims 1-7, further comprising:
an image sensor disposed so that light entering through the optical aperture passes through the lens structure and then is incident on the image sensor.

9. A method comprising:
providing a first wafer (120) on which a metal layer (22) is disposed, the metal layer defining optical apertures, and the first wafer being transparent to an application wavelength and covering the optical apertures;
providing a second wafer (124) having a lens structure (26) on a surface of the second wafer, wherein the lens structure is defined by a metastructure distributed across a surface of the second wafer and comprising meta-atoms configured to change a local amplitude, a local phase, or both, of a light wave at the application wavelength, the second wafer being transparent to the application wavelength;
providing a third wafer, wherein the third wafer is a spacer wafer, (114) wherein there are openings (28) extending through the spacer wafer from a first side of the spacer wafer to a second side of the spacer wafer, wherein the openings contain a vacuum or air; and
forming a wafer stack comprising the first wafer, the second wafer, and the third wafer, wherein forming the wafer stack comprises
attaching the first side of the third wafer (114) to the first wafer (120), and
attaching the second side of the third wafer (114) either to the second wafer, (124) or to a protective covering that covers the metastructure;
wherein the lens structure (26) is closer to the first wafer than is the second wafer, and wherein each of the optical apertures is aligned with a respective one of the openings in the spacer wafer.

10. The method of claim 9, further including:
separating the wafer stack into individual optical devices.

11. The method of claim 9, further comprising:
providing an image sensor so that light entering through the optical aperture of one of the individual optical devices passes through the lens structure and then is incident on the image sensor.

12. The method of any one of claims 9-11, wherein the first wafer and the second wafer are composed of glass, and/or wherein the spacer wafer is composed of glass.

13. The method of any one of claims 10-12, wherein the metal layer defining the optical apertures is composed of a black chrome coating.

14. The method of any one of claims 9-13, wherein the openings contain air.

15. The method of claim 9, wherein the lens structure includes optically active regions each of which is surrounded laterally by a respective optically inactive region, and wherein the method includes attaching the optically inactive regions to the second side of the spacer wafer.

## Patentansprüche

1. Einrichtung (10, 10A, 10C), umfassend:
ein Blendensubstrat (12), das einen ersten Träger (20) umfasst, auf dem eine Metallschicht (22) angeordnet ist, wobei die Metallschicht eine optische Blende (18) definiert und der erste Träger für eine Anwendungswellenlänge transparent ist und die optische Blende (18) bedeckt;
ein Linsensubstrat (24), das eine Linsenstruktur (26) auf einem Träger (24) beinhaltet, wobei die Linsenstruktur näher an dem Blendensubstrat (12) liegt als der Träger, und wobei die Linsenstruktur auf einer ganzen Metaoberfläche definiert ist, die über einer Oberfläche des Trägers verteilt ist, und Metaatome umfasst, die konfiguriert sind, um eine lokale Amplitude, eine lokale Phase oder beide einer Lichtwelle mit einer Anwendungswellenlänge zu ändern, und wobei der Träger für die Anwendungswellenlänge transparent ist; und
einen Abstandshalter (14), wobei ein erstes Ende des Abstandshalters an dem Blendensubstrat (12) befestigt ist und ein zweites Ende des Abstandshalters entweder an dem Linsensubstrat (24) oder an einer Schutzabdeckung (30) befestigt ist, welche die Metaoberfläche bedeckt, und
wobei sich eine Öffnung (28) von dem ersten Ende durch den Abstandshalter (14) zu dem zweiten Ende erstreckt, wobei die Öffnung ein Vakuum oder Luft enthält.

2. Einrichtung nach Anspruch 1, wobei die Linsenstruktur der optischen Blende zugewandt ist.

3. Einrichtung nach Anspruch 1, wobei die Linsenstruktur dem ersten Träger zugewandt ist.

4. Einrichtung nach einem der Ansprüche 1 bis 3, wobei der Träger, auf dem die Linsenstruktur angeordnet ist, und der erste Träger, auf dem die Metallschicht angeordnet ist, aus Glas bestehen.

5. Einrichtung nach einem der Ansprüche 1 bis 4, wobei die Metallschicht, welche die optische Blende definiert, aus einer Schwarzchrombeschichtung besteht.

6. Einrichtung nach einem der Ansprüche 1 bis 5, wobei die Öffnung Luft enthält.

7. Einrichtung nach Anspruch 1, wobei die Linsenstruktur ein optisch aktives Gebiet beinhaltet, das seitlich von einem optisch inaktiven Gebiet umgeben ist, und wobei das zweite Ende des Abstandshalters an dem optisch inaktiven Gebiet der Linsenstruktur befestigt ist.

8. Einrichtung nach einem der Ansprüche 1 bis 7, die ferner umfasst:
einen Bildsensor, der so angeordnet ist, dass Licht, das durch die optische Blende eintritt, die Linsenstruktur durchläuft und danach auf den Bildsensor auftrifft.

9. Verfahren, umfassend:
Bereitstellen eines ersten Wafers (120), auf dem eine Metallschicht (22) angeordnet ist, wobei die Metallschicht optische Blenden definiert und wobei der erste Wafer für eine Anwendungswellenlänge transparent ist und die optischen Blenden bedeckt;
Bereitstellen eines zweiten Wafers (124), der eine Linsenstruktur (26) auf einer Oberfläche des zweiten Wafers aufweist, wobei die Linsenstruktur durch eine Metastruktur definiert wird, die über eine Oberfläche des zweiten Wafers verteilt ist und Metaatome umfasst, die konfiguriert sind, um eine lokale Amplitude, eine lokale Phase oder beide einer Lichtwelle mit der Anwendungswellenlänge zu ändern, wobei der zweite Wafer für die Anwendungswellenlänge transparent ist;
Bereitstellen eines dritten Wafers, wobei der dritte Wafer ein Abstandshalterwafer ist (114), wobei Öffnungen (28) vorhanden sind, die sich durch den Abstandshalterwafer von einer ersten Seite des Abstandshalterwafers zu einer zweiten Seite des Abstandshalterwafers erstrecken, wobei die Öffnungen ein Vakuum oder Luft enthalten; und
Bilden eines Waferstapels, der den ersten Wafer, den zweiten Wafer und den dritten Wafer umfasst, wobei das Bilden des Waferstapels umfasst:
Befestigen der ersten Seite des dritten Wafers (114) an dem ersten Wafer (120), und
Befestigen der zweiten Seite des dritten Wafers (114) entweder an dem zweiten Wafer (124) oder an einer Schutzabdeckung, welche die Metastruktur bedeckt;
wobei die Linsenstruktur (26) näher als der zweite Wafer an dem ersten Wafer liegt, und wobei jede der optischen Blenden auf eine jeweilige der Öffnungen in dem Abstandshalterwafer ausgerichtet ist.

10. Verfahren nach Anspruch 9, das ferner beinhaltet: Trennen des Waferstapels in einzelne optische Vorrichtungen.

11. Verfahren nach Anspruch 9, das ferner umfasst: Bereitstellen eines Bildsensors, sodass Licht, das durch die optische Blende von einer der einzelnen optischen Vorrichtungen eintritt, die Linsenstruktur durchläuft und danach auf den Bildsensor auftrifft.

12. Verfahren nach einem der Ansprüche 9 bis 11, wobei der erste Wafer und der zweite Wafer aus Glas bestehen und/oder wobei der Abstandshalterwafer aus Glas besteht.

13. Verfahren nach einem der Ansprüche 10 bis 12, wobei die Metallschicht, welche die optischen Blenden definiert, aus einer Schwarzchrombeschichtung besteht.

14. Verfahren nach einem der Ansprüche 9 bis 13, wobei die Öffnungen Luft enthalten.

15. Verfahren nach Anspruch 9, wobei die Linsenstruktur optisch aktive Gebiete beinhaltet, die jeweils seitlich von einem jeweiligen optisch inaktiven Gebiet umgeben sind, und wobei das Verfahren ein Befestigen der optisch inaktiven Gebiete an der zweiten Seite des Abstandshalterwafers beinhaltet.

## Revendications

1. Appareil (10, 10A, 10C) comprenant :
un substrat à orifice (12) comprenant un premier support (20) sur lequel est disposée une couche métallique (22), la couche métallique définissant un orifice optique (18), et le premier support étant transparent à une longueur d'onde d'application et recouvrant l'orifice optique (18) ;
un substrat de lentille (24) comportant une structure de lentille (26) sur un support (24), la structure de lentille étant plus proche du substrat à orifice (12) que ne l'est le support, et la structure de lentille étant définie tout au long d'une métasurface répartie d'un bout à l'autre d'une surface du support et comprenant des méta-atomes conçus pour modifier une amplitude locale, une phase locale, ou les deux, d'une onde lumineuse à une longueur d'onde d'application, et le support étant transparent à la longueur d'onde d'application ; et
une entretoise (14), une première extrémité de l'entretoise étant fixée au substrat à orifice (12), et une deuxième extrémité de l'entretoise étant fixée soit au substrat de lentille (24), soit à un revêtement protecteur (30) qui recouvre la métasurface, et
une ouverture (28) s'étendant à travers l'entretoise (14) de la première extrémité à la deuxième extrémité, l'ouverture contenant un vide ou de l'air.

2. Appareil de la revendication 1, dans lequel la structure de lentille fait face à l'orifice optique.

3. Appareil de la revendication 1, dans lequel la structure de lentille fait face au premier support.

4. Appareil de l'une quelconque des revendications 1 à 3, dans lequel le support sur lequel est disposée la structure de lentille et le premier support sur lequel est disposée la couche métallique sont composés de verre.

5. Appareil de l'une quelconque des revendications 1 à 4, dans lequel la couche métallique définissant l'orifice optique est composée d'un revêtement de chrome noir.

6. Appareil de l'une quelconque des revendications 1 à 5, dans lequel l'ouverture contient de l'air.

7. Appareil de la revendication 1, dans lequel la structure de lentille comporte une région optiquement active entourée latéralement par une région optiquement inactive, et dans lequel la deuxième extrémité de l'entretoise est fixée à la région optiquement inactive de la structure de lentille.

8. Procédé de l'une quelconque des revendications 1 à 7, comprenant en outre :
un capteur d'images disposé de telle sorte que la lumière pénétrant par l'orifice optique traverse la structure de lentille et est ensuite incidente sur le capteur d'images.

9. Procédé comprenant :
l'obtention d'une première tranche (120) sur laquelle est disposée une couche métallique (22), la couche métallique définissant des orifices optiques, et la première tranche étant transparente à une longueur d'onde d'application et recouvrant les orifices optiques ;
l'obtention d'une deuxième tranche (124) dotée d'une structure de lentille (26) sur une surface de la deuxième tranche, la structure de lentille étant définie par une métastructure répartie d'un bout à l'autre d'une surface de la deuxième tranche et comprenant des méta-atomes conçus pour modifier une amplitude locale, une phase locale, ou les deux, d'une onde lumineuse à la longueur d'onde d'application, la deuxième tranche étant transparente à la longueur d'onde d'application ;
l'obtention d'une troisième tranche, la troisième tranche étant une tranche faisant entretoise (114), des ouvertures (28) s'étendant à travers la tranche faisant entretoise d'un premier côté de la tranche faisant entretoise à un deuxième côté de la tranche faisant entretoise, les ouvertures contenant un vide ou de l'air ; et
la formation d'un empilement de tranches comprenant la première tranche, la deuxième tranche et la troisième tranche, la formation de l'empilement de tranches comprenant
la fixation du premier côté de la troisième tranche (114) à la première tranche (120), et
la fixation du deuxième côté de la troisième tranche (114) soit à la deuxième tranche (124), soit à un revêtement protecteur qui recouvre la métastructure ;
dans lequel la structure de lentille (26) est plus proche de la première tranche que ne l'est la deuxième tranche, et dans lequel chacun des orifices optiques est aligné avec une ouverture respective de la tranche faisant entretoise.

10. Procédé de la revendication 9, comportant en outre : la division de l'empilement de tranches en dispositifs optiques individuels.

11. Procédé de la revendication 9, comprenant en outre : la mise en place d'un capteur d'images de telle sorte que la lumière pénétrant par l'orifice optique d'un des dispositifs optiques individuels traverse la structure de lentille et soit ensuite incidente sur le capteur d'images.

12. Procédé de l'une quelconque des revendications 9 à 11, dans lequel la première tranche et la deuxième tranche sont composées de verre, et/ou dans lequel la tranche faisant entretoise est composée de verre.

13. Procédé de l'une quelconque des revendications 10 à 12, dans lequel la couche métallique définissant les orifices optiques est composée d'un revêtement de chrome noir.

14. Procédé de l'une quelconque des revendications 9 à 13, dans lequel les ouvertures contiennent de l'air.

15. Procédé de la revendication 9, la structure de lentille comportant des régions optiquement actives dont chacune est entourée latéralement par une région optiquement inactive respective, et le procédé comportant la fixation des régions optiquement inactives au deuxième côté de la tranche faisant entretoise.
